**Europäisches Patentamt**

**European Patent Office**

**Office européen des brevets**

(19)

(11) Veröffentlichungsnummer: **0 208 160 B1**

(12) **EUROPÄISCHE PATENTSCHRIFT**

(45) Veröffentlichungstag der Patentschrift:
28.12.88

(21) Anmeldenummer: **86108013.3**

(22) Anmeldetag: **12.06.86**

(51) Int. Cl.⁴: **F 42 B 15/033** // F02K9/10

(54) Impulstriebwerk.

(30) Priorität: **13.06.85 DE 3521204**

(43) Veröffentlichungstag der Anmeldung:
**14.01.87 Patentblatt 87/3**

(45) Bekanntmachung des Hinweises auf die Patenterteilung:
**28.12.88 Patentblatt 88/52**

(84) Benannte Vertragsstaaten:
**DE FR GB SE**

(56) Entgegenhaltungen:
EP-A- 0 025 373
DE-A- 3 024 842
FR-A- 2 165 135
FR-A- 2 188 135
FR-A- 2 346 673
FR-A- 2 538 377
US-A- 1 883 758
US-A- 3 034 434
US-A- 3 316 719
US-A- 3 328 962
US-A- 3 504 633

(73) Patentinhaber: **DIEHL GMBH & CO., Stephanstrasse 49, D-8500 Nürnberg (DE)**

(72) Erfinder: **Stessen, Lothar, Dr., Gundekarstrasse 21, D-8560 Lauf (DE)**

(74) Vertreter: **Hofmann, Gerhard, Dipl.-Ing., Patentassessor et al, Stephanstrasse 49, D-8500 Nürnberg (DE)**

## Beschreibung

Die Erfindung betrifft ein Impulstriebwerk gemäss dem Oberbegriff des Anspruches 1.

Ein solches Impulstriebwerk mit mehreren Gasaustrittsdüsen ist aus der CA-PS 1 156 512 bekannt. Die Düsen werden dort jeweils aus einem Brennraum gespeist, der sich kreisförmig in der Ebene der Düsen-Achse errstreckt. Daraus resultiert ein relativ grosse Raumbedarf für den Aufbau eines mit möglichst vielen in einer Ebene ringförmig angeordneten Düsen auszustattenden Impulstriebwerkes; und deshalb bei beschränktem Kaliber des Projektils eine entsprechend starke Einschränkung des als zentrale Längsbohrung durch das Impulstriebwerk hindurchreichenden Funktionsraumes für das mit solchem Impulstriebwerk ausgestattete Projektil. Es kommt hinzu, dass die vorbekannte Brennkammer-Anordnung konstruktiv nur relativ wenig Freiheitsgrade in der Anordnung und Dimensionierung des Treibstoffes für hohen Wirkungsgrad der Umsetzung der Verbrennungsgase in Querimpulse an der jeweiligen Düse zulässt, weil die dort sternförmige Beschickung der Verbrennungskammer mit Treibstoff strömungsdynamisch sehr ungünstige Verhältnisse für den Gasmassen-Durchsatz erbringt.

In Erkenntnis dieser Gegebenheiten liegt der Erfindung die Aufgabe zugrunde, ein Impulstriebwerk gattungsgemässer Art zu schaffen, das bei mässiger radialer Ausdehnung der Brennkammer eine Variation des erzeugten Impulses in konstruktiv weiten Grenzen, bei hohem Wirkungsgrad aufgrund günstiger Strömungsverhältnisse für die Reaktionsgasmassen, zulässt; und das in einer Querschnittsebene mit relativ vielen, peripher unterschiedlich orientierten, Impulsdüsen ausgestattet werden kann und sich dadurch insbesondere zur gezielten Kurskorrektur von Projektilen in Form von Submunitionskörpern eignet, wie in den eigenen älteren Offenlegungsschriften DE-A-34 27 227.5 vom 24.07.1984 oder DE-A-35 16 673.8 vom 09.05.1985 näher beschrieben.

Diese Aufgabe wird erfindungsgemäss dadurch gelöst, dass das gattungsgemässe Impulstriebwerk die Kennzeichnungsmerkmale des Anspruches 1 aufweist.

Nach dieser Lösung ist der bei gegebenen Aussenabmessungen verfügbare Raum des Impulstriebwerkes optimal für die Aufnahme von Treibstoff ausnutzbar. Die Tiefenerstreckung in Richtung der Düsen-Achse, also die radiale Tiefe bezüglich der Triebwerks-Längsachse, kann gemäss den konstruktiven Anforderungen, insbesondere in Hinblick auf den Durchmesser der Längsbohrung bei gegebenen Kaliberabmessungen, frei gewählt werden, weil das Brennkammer-Volumen durch deren Höhe in sehr weiten Grenzen frei variierbar ist. Die Geometrie der Kammer in der Form eines Zylinder-Hohlwandungsausschnittes erlaubt eine relativ einfache Bestimmung des Oberflächenverlaufes des Treibstoffes für ungestörte Strömungsverhältnisse der Reaktionsgas-Massen, die die zur Impulserzeugung ihren engsten Querschnitt nur und erst bei Austritt durch die Düse selbst vorfinden sollen. Die Düsen-Achse muss dabei nicht symmetrisch in bezug auf die Längs- und Peripher-Erstreckung der Kammer, also beispielsweise nicht unbedingt in halber Höhe der Kammer angeordnet sein; was — unter Berücksichtigung der Oberflächen-Profilierung des Treibstoffes zur entsprechenden Anpassung der Reaktionsgas-Strömungsquerschnitte — bei gegebenen Einbauverhältnissen einfache konstruktive Möglichkeiten eröffnet, durch Verlagerung bzw. Neigung der Düsen-Achse der Impuls-Richtung eine bestimmte Orientierung beispielsweise bezüglich des gegebenen Schwerpunktes des Projektils insgesamt zu geben.

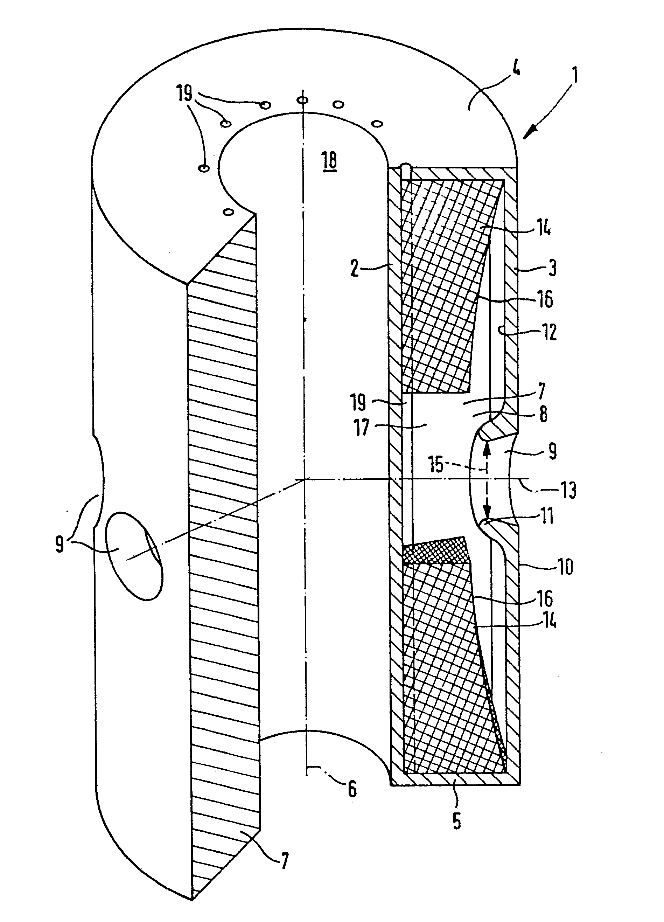

Zusätzliche Alternativen und Weiterbildungen sowie weitere Merkmale und Vorteile der Erfindung ergeben sich aus den weiteren Ansprüchen und — auch unter Berücksichtigung der Darlegungen in der Zusammenfassung — aus nachstehender Beschreibung eines in der Zeichnung unter Beschränkung auf das Wesentliche stark abstrahiert aber angenähert massstabsgerecht skizzierten bevorzugten Ausführungsbeispiels zur erfindungsgemässen Lösung. Die einzige Figur der Zeichnung zeigt in schräger Stirnansicht, teilweise aufgeschnitten, ein erfindungsgemäss ausgestaltetes Impulstriebwerk.

Das Impulstriebwerk 1 weist ein hohlzylindrisches Gehäuse mit einer zylindrischen Innenwand 2, einer koaxialen Aussenwand 3 und je einer kreisringförmigen oberen und unteren Stirnwand 4, 5 auf. Wie aus der Schnittdarstellung ersichtlich ist der Innenraum dieses Gehäuses durch parallel zu seiner Längsachse 6 und radial sich erstreckende Trennwände 7 in eine Anzahl einander peripher benachbarter Kammern 8 unterteilt, die sich mit einem Querschnitt gemäss der Geometrie eines Kreisringausschnittes über die axiale Länge des Impulstriebwerkes 1 zwischen den Stirnwänden 4-5 erstrecken. Der in der Zeichnung herausgeschnittene Ausschnitt erstreckt sich von der Mittenebene einer Trennwand 7 (in der Darstellung links) über mehrere solcher Kammern zur Mittelebene einer Kammer 8 (in der Zeichnung rechts, mit Blick gegen die Trennwand 7 zur dort nächstfolgenden Kammer).

Jede Kammer-Aussenwand 3 ist, z.B. in der Mittenebene der Kammer 8, von einer Düse 9 durchbrochen, deren Querschnitt von der Aussenmantelfläche 10 her gesehen sich zum Innern der Kammer 8 hin verjüngt. Vorzugsweise zieht die Düse 9 sich längs eines Vorsprunges 11 an der Innenmantelfläche 12 der Aussenwand 3 ins Innere der Kammer 8 hinein, um in Richtung der Düsen-Achse 13 genügend Materialtiefe zur Ausgestaltung eines wünschenswerten Querschnittsverlaufes für die angestrebte Wirkung der Düse 9 verfügbar zu haben.

Die Achse 13 der Düse 9 verläuft in der Regel orthogonal zur Triebwerks-Längsachse 6; wie einleitend erwähnt kann aber auch eine bestimmte Neigung zwischen beiden Achsen 13-6 konstruktiv vorgegeben sein, wenn der Triebwerksschub neben seiner radialen Hauptrichtung auch eine axiale Komponente enthalten soll.

Im Innern der Kammer 8 sind deren Trennwände 7 und die Innenwand 2 mit festem Treibstoff 14 belegt, der sich parallel zur Längsachse 6 bis hin zu den Stirnwänden 4, 5 erstreckt. Die Kreuzschraffur bei der Treibstoff-Schnittdarstellung in der mittig geschnittenen Kammer 8 soll zum Ausdruck bringen, dass es sich bei dieser Treibstoff-Belegung nicht um einen kompakten Massekörper handelt, sondern im Interesse einer möglichst grossen Abbrand-Oberfläche um einen scheibenförmigen oder wabenförmigen Aufbau von Ladungsträgern; wie als solches für die Beschickung von Reaktionsräumen in Impuls-Treibladungssätzen zum möglichst schlagartigen, also grossflächigen Treibstoff-Abbrand bekannt. Zur Vereinfachung der Darstellung sind die Befestigungen und Zwischenräume der Platten- oder Waben-Stapel aus Treibstoff 14 in der Zeichnung nicht näher ausgeführt.

Für einen hohen Wirkungsgrad des Impulstriebwerkes 1 ist es wichtig, dass die Massen der beim Treibsatz-Abbrand freigesetzten Reaktionsgase in ihrer Strömungsrichtung zum Austritt durch die Düse 9 nirgendwo einen engeren Strömungsquerschnitt vorfinden, als am für die Düsenwirkung, also für die Ausbildung einer Reaktionskraft massgeblichen engsten Düsenquerschnitt 15. Da auf dem Wege von den Stirnwänden 4, 5 und von den Trennwänden 7 zur Düsen-Achse 13 hin die Masse der Abbrand-Gase zunimmt, wird diese Bedingung durch einen bezüglich des Zentrums der Düse 9 praktisch punktsymmetrischen Verlauf einer konkav eingewölbten (im, durch die Achse 13 verlaufenden, Querschnitt zum Zentrum hin logarithmisch zurückweichenden) äusseren Begrenzungsfläche 16 der Belegung mit Treibstoff 14 erfüllt.

Da diese Belegung beim in die Kammer 8 eintretenden Düsen-Vorsprung 11 einen entsprechenden stufenförmigen Rücksprung aufweisen würde, der die apparativen Befestigungsmöglichkeiten für den Treibstoff 14 einengen und dort nur noch geringe Massen an Treibstoff 14 erlauben würde, kann es zweckmässig sein, gemäss der zeichnerisch dargestellten Ausgestaltung koaxial um die Düsen-Achse 13 einen zylindrischen Freiraum 17 als Stauraum für die Abgase hinter der Düse 9 auszusparen.

Bei gegebener Kaliberabmessung (Aussendurchmesser der Aussenwand 3) und gegebenem Durchmesser der von der Innenwand 2 umgebenden Längsbohrung 18, bei vorgegebener Art des Treibstoffes 14, der wesentliche Parameter für die Impulsdimensionierung des Triebwerkes 1 die Menge des zum schlagartigen Abbrand verfügbaren Treibstoffes 14, also die axiale Länge der mit Treibstoff 14 belegbaren Kammer 8. Das Impulstriebwerk 1 lässt sich somit durch einfache Variation seiner axialen Länge unter Einhaltung eines Standard-Kalibers — und bei bevorzugter Standardausbildung der Geometrie der Düsen 9 — unterschiedlichen Impulsanforderungen anpassen; wobei lediglich die Steigung des logarithmischen Verlaufes der äusseren Begrenzungsfläche 16 der Belegung mit Treibstoff 14 den geänderten Verhältnissen hinsichtlich der Abbrand-Gasmassen anzupassen ist.

Für die Anzündung des Treibstoffes 14 ist symbolisch vereinfacht vorgesehen, ein Zündrohr 19 achsparallel von der Innenwand 2 über die Höhe der Kammer 8 durch den Treibstoff 14 hindurch verlaufen zu lassen; das beispielsweise durch eine über der oberen Stirnwand 4 angeordnete (in der Zeichnung nicht berücksichtigte) Zündsteuereinrichtung aktiviert werden kann, wenn die zugeordnete Querschub-Düse 9 wirksam werden soll.

In der Zeichnung ist nicht berücksichtigt, dass beim Einbau des hohlzylindrischen Mehrkammer-Impulstriebwerkes 1 in die Struktur eines Geschosses oder sonstigen Munitionsartikels durch die Längsbohrung 18 mechanische Konstruktionselemente der Struktur oder elektrische, pneumatische oder ähnliche Wirkverbindungen, z.B. zu einer Ortungseinrichtung für die Zielverfolgung, verlaufen können. Im übrigen dient die Aussparung dieser Längsbohrung 18 der munitionstechnischen Wirkung eines Munitionsartikels, etwa dem axialen Durchtritt eines hochenergetischen Materialstrahles oder Projektils nach Sprengstoff-Umformung einer Einlage.

## Patentansprüche

1. Impulstriebwerk (1), für die Querbeschleunigung eines Projektils, mit einem hohlzylindrischen Körper, dessen Aussenmantelfläche (10) von peripher gegeneinander versetzten Düsen (9) durchsetzt ist, die im Innern des Hohlzylindermantels je in eine Treibstoff-Kammer (8) münden, dadurch gekennzeichnet, dass die Kammer (8) die Form eines axial gestreckten Ausschnittes aus einer Zylinder-Hohlwandung aufweist, wobei der Ringraum zwischen zylindrischen Innen- und Aussenwänden (2, 3) durch radiale Trennwände (7) in peripher einander benachbarte Kammern (8) unterteilt ist.

2. Impulstriebwerk nach Anspruch 1, dadurch gekennzeichnet, dass eine Belegung mit Treibstoff (14) zwischen der Innenwand (2), den Trennwänden (7) und den Stirnwänden (4, 5) einer Kammer (8) gehaltert ist.

3. Impulstriebwerk nach Anspruch 2, dadurch gekennzeichnet, dass die der, von der Düse (9) durchsetzten, Kammer-Aussenwand (3) gegenüberliegende äussere Begrenzungsfläche (16) des Treibstoffes (14) in Richtung auf die Düse (9) hin einen konkav geschwungenen Verlauf aufweist.

4. Impulstriebwerk nach einem der vorangehenden Ansprüche, dadurch gekennzeichnet, dass konzentrisch zur Düsen-Achse (13) in der Kammer-Belegung mit Treibstoff (14) ein Freiraum (17) ausgebildet ist.

4. Impulstriebwerk nach einem der vorangehenden Ansprüche, dadurch gekennzeichnet, dass die Düse (9) in einem Vorsprung (11) an der Innenmantelfläche (12) der Kammer-Aussenwand (3) ausgebildet ist.

6. Impulstriebwerk nach einem der vorangehenden Ansprüche, dadurch gekennzeichnet, dass die Düsen-Achse (13) gegenüber dem geometrischen Mittelpunkt der Kammer (8) und/oder gegenüber der Triebwerks-Längsachse (6) versetzt verläuft.

7. Impulstriebwerk nach einem der vorangehenden Ansprüche, dadurch gekennzeichnet, dass die Düsen-Achse (13), nach Massgabe einer gewünschten Axialimpulskomponente zusätzlich zum Querimpuls, geneigt gegenüber der Lotrechten auf die Triebwerks-Längsachse (6) orientiert ist.

## Claims

1. An impulse engine (1), for the transverse acceleration of a projectile, with a hollow-cylindrical body, the outer jacket surface (10) of which is penetrated by peripherally mutually offset nozzles (9) which in the interior of the hollow-cylindrical jacket each open into a propellant chamber (8), characterised in that the chamber (8) has the shape of an axially elongate cutout from a cylinder hollow wall, in which respect the annular space between cylindrical inner and outer walls (2, 3) is subdivided by radial dividing walls (7) into peripherally mutually adjacent chambers (8).

2. An impulse engine according to claim 1, characterised in that a coating with propellant (14) is held between the inner wall (2), the dividing walls (7) and the end walls (4, 5) of a chamber (8).

3. An impulse engine according to claim 2, characterised in that the outer bounding surface (16) of the propellant (14) which lies opposite to the chamber outer wall (3) penetrated by the nozzle (9) has a concavely curved course in the direction of the nozzle (9).

4. An impulse engine according to one of the preceding claims, characterised in that a free space (17) is formed concentrically to the nozzle axis (13) in the chamber coating with propellant (14).

5. An impulse engine according to one of the preceding claims, characterised in that the nozzle (9) is fashioned in a projection (11) on the inner jacket surface (12) of the chamber outer wall (3).

6. An impulse engine according to one of the preceding claims, characterised in that the nozzle axis (13) extends offset relative to the geometric centre point of the chamber (8) and/or relative to the engine longitudinal axis (6).

7. An impulse engine according to one of the preceding claims, characterised in that the nozzle axis (13), in accordance with a desired axial impulse component in addition to the transverse impulse, is orientated inclined relative to the perpendicular to the engine longitudinal axis (6).

## Revendications

1. Propulseur à impulsions (1) pour l'accélération transversale d'un projectile, comportant un corps en forme de cylindre creux, dont la surface d'enveloppe extérieure (10) est traversée par des buses (9) décalées l'une par rapport à l'autre sur la périphérie, lesquelles débouchent respectivement dans une chambre à carburant (8) à l'intérieur de l'ensemble du cylindre creux, caractérisé en ce que la chambre (8) a la forme d'une portion d'une paroi creuse de cylindre allongée axialement, dans laquelle le volume annulaire entre les parois cylindriques intérieure et extérieure (2, 3) est divisé par des cloisons de séparation (7) radiales en chambres (8) voisines l'une de l'autre dans le sens périphérique.

2. Propulseur à impulsions selon la revendication 1, caractérisé en ce qu'une garniture constituée de carburant (14) est maintenue entre la paroi intérieure (2), les cloisons de séparation (7) et les parois frontales (4, 5) d'une chambre (8).

3. Propulseur à impulsions selon la revendication 2, caractérisé en ce que la surface de délimitation extérieure (16) du carburant (14) faisant face à la paroi extérieure (3) de la chambre et traversée par la buse (9) a, en direction de la buse (9), une courbure concave.

4. Propulseur à impulsions selon l'une des revendications précédentes, caractérisé en ce qu'un volume libre (17) est formée dans la garniture de chambre constituée de carburant (14), concentriquement à l'axe des buses (13).

5. Propulseur à impulsions selon l'une des revendications précédentes, caractérisé en ce que la buse (9) est formée dans une saillie (11) sur la surface de paroi intérieure (12) de la paroi extérieure de chambre (3).

6. Propulseur à impulsions selon l'une des revendications précédentes, caractérisé en ce que l'axe des buses (13) est décalé par rapport au centre géométrique de la chambre (8) et/ou par rapport à l'axe longitudinal (6) du propulseur.

7. Propulseur à impulsions selon l'une des revendications précédentes, caractérisé en ce que l'axe des buses (13) est incliné, en fonction d'une composante d'impulsion axiale recherchée en plus de l'impulsion transversale, par rapport à la perpendiculaire à l'axe longitudinal (6) du propulseur.